# EUROPEAN PATENT SPECIFICATION

(11) **EP 0 640 426 B1**
(45) Date of publication and mention of the grant of the patent: **02.05.1997**
(21) Application number: 93915015.7
(22) Date of filing: 23.02.1993
(51) Int. Cl.: B23K 10/00, H05H 1/26

(54) **ELECTRIC ARC PLASMA TORCH**
LICHTBOGENPLASMABRENNER
PISTOLET A PLASMA A ARC ELECTRIQUE

(43) Date of publication of application: 01.03.1995
(73) Proprietor: APUNEVICH, Alexandr Ivanovich, Moscow, 125565 (RU); TITARENKO, Evgeny Ivanovich, Zelenograd, 103617 (RU)
(72) Inventor: APUNEVICH, Alexandr Ivanovich, Moscow, 125565 (RU); TITARENKO, Evgeny Ivanovich, Zelenograd, 103617 (RU)
(74) Representative: Patentanwälte Zellentin & Partner
(86) International application number: RU9300053
(87) International publication number: WO9419139

(56) References cited:
- EP-A- 0 186 560
- SU-A- 188 276
- US-A- 4 701 590
- US-A- 4 791 268
- PATENT ABSTRACTS OF JAPAN vol. 5 no. 90 (M-073) ,12 June 1981 & JP-A-56 036375 (HITACHI) 9 April 1981,
- PATENT ABSTRACTS OF JAPAN vol. 14 no. 499 (M-1042) ,31 October 1990 & JP-A-02 205270 (HITACHI SEIKO) 15 August 1990,

## Description

### TECHNICAL FIELD

The present invention relates to electric-arc low-temperature plasma generators, i.e., plasma torches which can find application in mechanical engineering, automotive industry, aircraft, electrical-engineering, and some other industries for the various kinds of plasma treatment, such as cutting, welding, and heat treatment of surface of diverse materials.

More specifically this invention relates to those low-temperature plasma generators (plasma-arc torches) which make use of steam as a working medium (see, for example, JP-A-56 036 375).

### BACKGROUND ART

JP-A- 56 036375 discloses a plasma cutting torch with a cooling water path provided within a nozzle electrode provided in opposition to an second electrode, and its water discharge port is opened in the same direction as plasma arc. Porous metal such as sintered metal is filled in the cooling water path around the nozzle hole. The cooling water flowing in the cooling water path cools the nozzle electrode and at the time when it passes the sintered metal, part thereof is evaporated and is spouted from the water discharge port by becoming the mixed flow of high temperature water and steam. This steam flow is further evaporated by the plasma arc spouted from the nozzle hole, and the energy density of the plasma arc is increased by this mixed fluid and the cut end of cutting material is cooled.

Known in the art are plasma generators, wherein steam is used as a working medium, which can be supplied to the generator from a special source, or be produced immediately in the generator due to high temperatures. The steam generation process can be combined with heat abstraction from the electrodes.

A widespread solution of the problem aimed carrying out said process is supplying the vaporizable fluid through passages in the electrodes, said fluid vaporizing while flowing along said passages, simultaneously cooling the electrodes (PCT/FI 88/00427; SU, A, 1,620,032).

Control over the operating modes of low-temperature plasma generators, triggering mode inclusive, may be carried out by diverse methods. The most widely used method is adjusting the power of the supply source. Another method resides in control of the rate of working medium flow (FR, A, 2 ,045,865;DE, A1, 3,810,620).

The present invention makes use of a method for control over the plasma torch operating modes by changing the interelectrode gap. The method is a well-known one and can be carried into effect by a number of solutions. In one of such solutions the cathode is connected to the piston of a controlled hydraulic cylinder (EP, A1, 0289961). According to another known solution (EP, A1, 0249238), the electric motor controls, depending on the voltage applied thereto, the position of an axially-movable cathode with respect to a stationary anode.

### DISCLOSURE OF THE INVENTION

The heretofore-known constructions of low-temperature plasma which make use of steam as a working medium, said steam resulting from evaporation of the liquid working medium during operation of the generator and passing through the passages in the electrodes, have a complicated construction and are inconvenient in use. Such a complication of the construction is due to the presence of external communications connecting the plasma generator to a liquid container, and of internal communications for connection to the electrodes. Elimination of said disadvantage is a principal object the present invention is to solve.

Another object of the invention is to simplify the arc initiation process and to control the torch operating modes.

The former object of the invention is accomplished due to constructionally integrating the torch with the container for the vaporizable liquid and providing its admission to the discharge chamber accompanied by evaporation of said liquid through a porous heat-conducting material with which the torch body-to-container joint is filled. The container is filled with a moisture-absorbing material which is in contact with said porous heat-conducting material. To admit steam to the discharge chamber a ring made of a heat-conducting material is provided, said ring having passages opening into said chamber and being in contact with said porous material.

The torch body-to-container joint may be through a sleeve filled with the porous heat-conducting material.

The latter object is accomplished due to the provision and construction arrangement of a mechanism for special displacement of a cathode, adapted to impart intermittent motion to the cathode till its contacting the anode to initiate an arc, and a stepless control of the interelectrode gap there between. The former aim is attained by a spring-actuated button connected to a cathode-holder, while the latter, due to a lid coaxial with the cathode-holder and movable round the axis of the latter, said lid featuring a threaded joint with the container. The aforementioned button has a flange resting upon the inner wall of the lid.

The cathode-holder is movable along an electroinsulating tube put thereunto and enclosed in a tube from a heat-conducting material, both of said tubes running through the torch body and the container for the liquid to be vaporized.

### BRIEF DESCRIPTION OF THE DRAWINGS

In what follows the present invention is illustrated in the best exemplary embodiment thereof shown in the accompanying drawings, wherein:

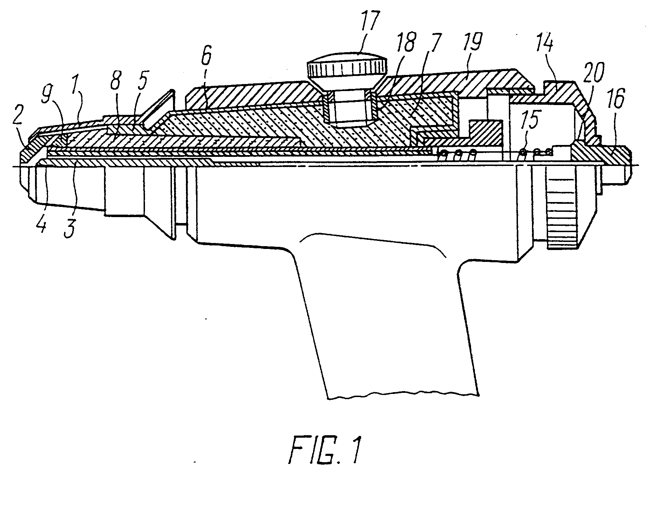

FIG.1 is a side sectional view of the torch of the present invention;

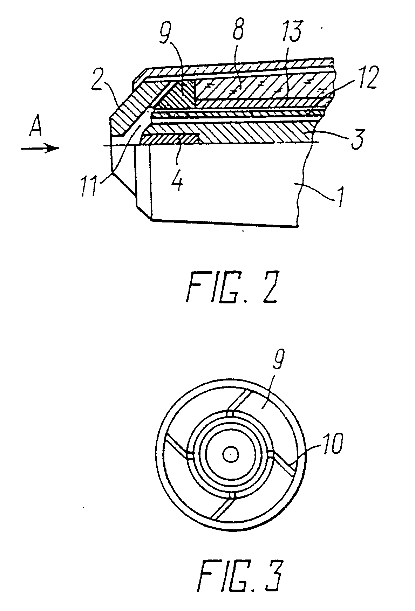

FIG.2 is a scaled-up view of an outlet portion of the torch body; and
FIG.3 is a view along the arrow A in FIG.2, with the anode out of position.

### BEST METHOD OF CARRYING OUT THE INVENTION

The torch has a body 1 accommodating coaxially-arranged an outlet nozzle, i.e., an anode 2 and a cathode-holder 3 with a rod-shaped centrally located cathode 4. The body 1 communicates with the container 6 for a working fluid through a sleeve 5. The container is filled with a moister-absorbing material 7, and the sleeve 5, with a porous heat-conducting material 8 which is in contact with the moisture-absorbing material 7 and with a ring 9 made of a heat-conducting material and having tangential passages 10 opening into a discharge chamber 11 and situated on the surface contacting the nozzle-anode, the former on the side of the container, and the latter, on the side of the torch body.

The rod-shaped cathode holder is axially movable inside a moisture- and heat-resistant electroinsulating tube 12 running through the body 1 and the container 6, and encompassed by a heat-conducting tube 13 throughout its length.

The torch is provided with a mechanism for imparting an intermittent stepwise and stepless motion to the cathode-holder 3 and to the cathode itself, said mechanism appearing as a lid 14 arranged coaxially with the cathode-holder 3 and movable on thread with respect to the container 6, said lid having a center hole which accommodates a button 16 loaded by a spring 15 and connected to the cathode-bolder 3 so as to be electrically insulated therefrom. The button has a flange 20 resting upon the inner wall of the lid 14.

The container 6 for the working fluid has a hole 18 closed with a blank plug 17 for filling-in the working fluid.

The supply voltage from a power source is fed with the aid of a conductor running behind a plastics facing 19 to the torch electrodes.

The torch operates as follows.

The blank plug 17 of the container 6 is opened and the working fluid (water) is filled through the hole 18 into the container 6, then the blank plug 17 is put in place, the power source is switch on to apply a voltage to the nozzle-anode 2 and the cathode 4 of the torch.

An arc is then stricken by a momentary pressing the button 16 of the cathode-holder displacement mechanism.

Upon pressing the button 16 the cathode-holder 3 performs intermittent motion inside the electroinsulating tube 13 till getting the cathode 4 in contact with the nozzle-anode 2. The cathode-holder 3 with the cathode 4 is returned to the initial position by the spring 15 which presses the flange 20 of the button 16 against the inner wall of the lid 14.

Once the cathode 4 has been put out of contact with the nozzle-anode 2 an electric arc is initiated in the discharge chamber 11.

The energy released on the nozzle when electric current flows through the arc, boats the nozzle, and the heat thus generated to transmitted, via the heat-conducting ring, to the water contained in the porous heat-conducting material 8. As a result, water turns into steam and an excess pressure is developed under the action of which steam passes through the tangential passages 10 of the ring 9 and gets into the discharge chamber 11, then escapes through the center axial hole in the nozzle-anode 2, thus stabilizing the arc column and simultaneously cooling the electrodes.

The moisture-absorbing material 7 found in the container 6 provides for a uniform make-up of the porous material with water and a respectively uniform, as with time, water vaporization.

By turning the threaded lid 14 into or out of the end face of the container 6 opposite to the nozzle-anode 2 with the aid of the flange 20 of the button 16, one can displace gradually the cathode-holder 3 inside the electroinsulating tube 12, thus controlling the interelectrode gap between the cathode and the nozzle-anode 2 in the discharge chamber.

The output current of the power source is changed depending on a required mode of use of the present torch, and the lid 14 is rotated in order to provide conditions for forming a stable arc column within a broad range of current intensities.

### INDUSTRIAL APPLICABILITY

When the present torch made to the invention disclosed herein has been tested, there have been attained stable arc initiation and arcing process in a current intensity range of from 1 to 5 A with an output voltage of the power source from 130 to 170 V.

## Claims

1. An electric-arc plasma torch, comprising a body (1) with a discharge chamber (11), both being arranged coaxially with an outlet nozzle-anode (2) and a rod-shaped centrally located cathode (4) fixed in a holder (3), a container (6) for a working fluid, said container being connected to the body (1) and being filled with a moisture-absorbing material (7), and the joint between the body (1) and the container (6) is filled with a porous heat-conducting material (8) which contacts, on the side of the container (6), the moisture-absorbing material (7) found in the container (6), and on the side of the body (1), a ring (9) made of a heat-conducting material and provided with passages (10) opening into a discharge chamber (11), said ring being in contact with the nozzle-anode (2).

2. An electric-arc plasma torch according to Claim 1, CHARACTERIZED in that the container (6) is connected to the body (1) through a sleeve (5) filled with a porous material inside which the heat-conducting cathode-holder (3) runs.

3. An electric-arc plasma torch according to Claim 1 or 2, CHARACTERIZED in that the cathode-holder (3) is enclosed in an electroinsulating tube (12) which in turn is placed in a tube (13) made of a heat-conducting material, both of the tubes (12) and (13) passing through the body (1) and the container (6).

4. An electric-arc plasma torch according to Claim 3, CHARACTERIZED in that the cathode-holder (3) is axially movable in the electroinsulating tube (12) and is provided with a mechanism for imparting an intermittent motion thereto until the cathode gets in contact with the anode to strike an arc and for control of a working gap between the anode and the cathode.

5. An electric-arc plasma torch according to Claim 4, CHARACTERIZED in that the mechanism for imparting motion to the cathode-holder (3) appears as a lid (14) arranged coaxially thereto and movable in a thread with respect to the torch, said lid having a center hole, wherein a button (16) is accommodated, said button being spring-loaded, connected to the cathode-holder, and electrically insulated therefrom, and also having a flange resting upon an inner wall of said lid.

## Patentansprüche

1. Lichtbogenplasmabrenner, enthaltend ein Gehäuse (1) mit einer Entladungskammer (11), die beide koaxial zu einer Auslaßdüsenanode (2) und einer stabförmigen zentral angeordneten Kathode (4), die in einem Halter (3) fixiert ist, angeordnet sind, einen Behälter (6) für ein Arbeitsfluid, wobei der Behälter mit dem Gehäuse (1) verbunden ist und mit einem feuchtigkeitsabsorbierenden Material (7) gefüllt ist und die Verbindungsstelle zwischen dem Gehäuse (1) und dem Behälter (6) mit einem porösen wärmeleitenden Material (8) gefüllt ist, das auf der Seite des Behälters (6) das in dem Behälter (6) vorhandene feuchtigkeitsabsorbierende Material (7) und auf der Seite des Körpers (1) einen Ring (9) kontaktiert, der aus wärmeleitendem Material hergestellt ist und mit Verbindungsgängen (10) versehen ist, die sich in die Entladungskammer (11) öffnen, wobei der Ring mit der Düsenanode (2) in Kontakt ist.

2. Lichtbogenplasmabrenner nach Anspruch 1, dadurch gekennzeichnet, daß der Behälter (6) mit dem Gehäuse (1) durch eine Muffe (5) verbunden ist, die mit einem porösen Material gefüllt ist, in dem der wärmeleitenden Kathodenhalter (3) verläuft.

3. Lichtbogenplasmabrenner nach Anspruch 1 oder 2, dadurch gekennzeichnet, daß der Kathodenhalter (3) in einem elektrisch isolierenden Rohr (12) umschlossen ist, das wiederum in einem aus wärmeleitendem Material hergestellten Rohr (13) angeordnet ist, wobei sich beide Rohre (12, 13) durch das Gehäuse (1) und den Behälter (6) hindurcherstrecken.

4. Lichtbogenplasmabrenner nach Anspruch 3, dadurch gekennzeichnet, daß der Kathodenhalter (3) in dem elektrisch isolierenden Rohr (12) axial beweglich ist und mit einem Mechanismus versehen ist, um auf ihn eine intermittierende Bewegung zu übertragen, bis die Kathode zum Zünden eines Lichtbogens mit der Anode in Kontakt kommt, und um einen Arbeitsspalt zwischen der Anode und der Kathode zu steuern.

5. Lichtbogenplasmabrenner nach Anspruch 4, dadurch gekennzeichnet, daß der Mechanismus zum Übertragen einer Bewegung auf den Kathodenhalter (3) als ein Deckel (14) ausgebildet ist, der zu diesem koaxial angeordnet ist und in einer Schraubbewegung bezüglich dem Brenner bewegbar ist, wobei der Deckel ein zentrales Loch aufweist, in dem ein Druckknopf (16) untergebracht ist, der federbelastet, mit dem Kathodenhalter verbunden und von diesem elektrisch isoliert ist und auch einen Flansch aufweist, der auf einer Innenwand des Deckels ruht.

## Revendications

1. Pistolet à plasma à arc électrique comprenant un logement (1) et une chambre de décharge (11) disposés tous deux coaxialement par rapport à une anode-tuyère de sortie (2) et une cathode (4) en forme de tige placée au centre, fixée dans un support (3), un réservoir (6) pour un liquide de travail, ledit réservoir étant connecté au logement (1) et étant rempli d'un matériau absorbant l'humidité (7) et le joint entre le logement (1) et le réservoir (6) étant rempli par un matériau poreux conduisant la chaleur (8) qui est en contact du côté du réservoir (6) avec le matériau absorbant l'humidité (7) situé dans le réservoir (6) et du côté du logement (1) une bague (9) formée d'un matériau conduisant la chaleur et comportant des passages (10) s'ouvrant dans une chambre de décharge (11), ladite bague étant en contact avec l'anode-tuyère (2).

2. Pistolet à plasma à arc électrique selon la revendication 1, caractérisé en ce que le réservoir (6) est connecté au logement (1) par un manchon (5) rempli d'un matériau poreux, dans lequel passe le support-cathode conduisant la chaleur (3).

3. Pistolet à plasma à arc électrique selon la revendication 1 ou 2, caractérisé en ce que le support-cathode (3) est placé dans un tube électriquement isolant (12) qui est placé à son tour dans un tube (13) formé d'un matériau conduisant la chaleur, les deux tubes (12) et (13) traversant le logement (1) et le réservoir (6).

4. Pistolet à plasma à arc électrique selon la revendication 3, caractérisé en ce que le support-cathode (3) est mobile axialement dans le tube électriquement isolant (12) et est équipé d'un mécanisme pour conférer un mouvement intermittent à celui-ci jusqu'à ce que la cathode vienne en contact avec l'anode pour provoquer la décharge d'un arc et pour régler un intervalle de travail entre l'anode et la cathode.

5. Pistolet à plasma à arc électrique selon la revendication 4, caractérisé en ce que le mécanisme pour conférer un mouvement au support-cathode (3) se présente sous forme d'un couvercle (14) disposé coaxialement par rapport à celui-ci et pouvant se déplacer dans un filetage par rapport au pistolet, ledit couvercle ayant un trou central dans lequel est placé un bouton (16), ledit bouton étant assemblé sous la pression d'un ressort au support-cathode et étant électriquement isolé par rapport à celui-ci et comportant également un flasque reposant sur une paroi intérieure dudit couvercle.
